# EUROPÄISCHE PATENTSCHRIFT

(11) **EP 2 956 083 B1**
(45) Veröffentlichungstag und Bekanntmachung des Hinweises auf die Patenterteilung: **11.04.2018**
(21) Anmeldenummer: 14703336.9
(22) Anmeldetag: 05.02.2014
(51) Int. Cl.: A61C 8/00, A61C 13/277

(54) **ZAHNPROTHETISCHE ANORDNUNG UND ZAHNPROTHETISCHES SYSTEM**
DENTAL PROSTHETIC ARRANGEMENT AND DENTAL PROSTHETIC SYSTEM
AGENCEMENT ET SYSTÈME DE PROTHÈSE DENTAIRE

(30) Priorität: 15.02.2013 DE 102013101511
(43) Veröffentlichungstag der Anmeldung: 23.12.2015
(73) Patentinhaber: BREDENT GMBH & CO. KG, 89250 Senden (DE)
(72) Erfinder: BÖHM, Wilfried, 89250 Senden (DE); BREHM, Peter, 89250 Senden (DE); BENZ, Roland, 89073 Ulm (DE)
(74) Vertreter: Baur & Weber Patentanwälte PartG mbB
(86) Internationale Anmeldenummer: PCT/EP2014/052256
(87) Internationale Veröffentlichungsnummer: WO 2014/124856

(56) Entgegenhaltungen:
- EP-A1- 0 894 480
- WO-A1-02/24104
- WO-A1-97/10770
- WO-A1-2012/065848
- US-A1- 2010 266 985
- US-B1- 6 283 753

## Beschreibung

Die Erfindung betrifft eine zahnprothetische Anordnung und ein zahnprothetisches System mit einer solchen Anordnung.

Bei Zahnprothesen für fehlende Zähne werden zunehmend zahnprothetische Anordnungen eingesetzt, welche über einen im Kieferknochen verankerten Kieferimplantat einen Aufbau aufweisen. Für den Einsatz mehrerer benachbarter oder auch aller Zähne eines Kiefers kann vorteilhafterweise ein zusammenhängender Aufbau über mehrere Kieferimplantate vorgesehen sein.

Die herkömmliche Art der Befestigung eines zahnprothetischen Aufbaus auf einem Kieferimplantat mittels eines Zements führt zu einem festsitzenden Zahnersatz. Die Zementierung erweist sich nachteiligerweise als Ursache für den weit überwiegenden Teil der Periimplantitis-Fälle. Aufzementierte Aufbauten sind typischerweise auch nicht zerstörungsfrei abnehmbar.

Um ohne Beschädigung oder Zerstörung des Implantats den Aufbau abnehmen zu können, sind verschiedene Systeme der lösbaren Befestigung einer Prothese auf einem Unterbau mit einem oder mehreren Kieferimplantaten bekannt. Typischerweise wird eine nur von einem Behandler, gegebenenfalls unter Verwendung eines Werkzeugs abnehmbare Prothese als bedingt abnehmbar und eine auch vom Benutzer selbst werkzeuglos lösbare und einsetzbare Prothese als abnehmbar bezeichnet. Solche bedingt abnehmbaren oder abnehmbaren Prothesen vermeiden zugleich die genannten Probleme der Zementierung.

In der US 6 299 447 B1 ist eine Verbindungsart nach Art von Druckknöpfen beschrieben, bei welcher in eine Prothese eine zum Kiefer hin offene Kappe eingegossen ist und auf dem Kieferimplantat ein am oberen Ende mit einem radialen Wulst pollerartig erweiterter Pfosten vom Kiefer weg ragt. Unter Zwischenfügen eines Ringes mit radial konvex gewölbter Wand kann die Kappe reversibel auf den Poller aufgeschnappt und von diesem unter Überwinden einer Haltekraft abgezogen werden. Solche Anordnungen sind insbesondere für Vollprothesen von besonderem Vorteil und auch durch den Träger der Prothese selbst entnehmbar und wieder einsetzbar, was als abnehmbare Prothese bezeichnet wird.

In der US 5 667 384 ist eine zahnprothetische Anordnung beschrieben, bei welcher auf einem Implantat eine Kopfschraube fest aufgeschraubt ist. Eine Aussparung in der Kappe einer abnehmbaren Prothese übergreift die Kopfschraube und eine im wesentlichen radial durch die Kappe führende Befestigungsschraube stützt sich mit einer konischen Fläche unten am Schraubenkopf ab und drückt die Kappe in Richtung des Kieferimplantats, wo sich Prothese und Implantat an einer konischen Dichtfläche gegeneinander abstützen. Die Befestigungsschraube zieht zugleich die gegenüber liegende Innenwand seitlich gegen den Schraubenkopf. Anstelle einer Kopfschraube als Teil eines mehrteiligen Implantats und als Gegenfläche zur Konusfläche der Befestigungsschraube kann auch eine auf dem Kieferimplantat befestigte Hülse mit konischer Außenwand, die mit einer konischen Innenwand der Kappe eine Anlagefläche bildet und mit einer umlaufenden Nut eine Gegenfläche zu der Befestigungsschraube bilden. Durch Lösen der Befestigungsschraube in einer Arztpraxis kann die Prothese vom Kiefer abgenommen werden, was als bedingt abnehmbar bezeichnet wird.

In der DE 10 2004 051 437 A1 ist eine Doppelkrone beschrieben, bei welcher eine Primärkrone eine zylindrische Außenfläche besitzt und eine Sekundärkrone mit einer passend ausgeformten zylindrischen Aussparung über die Primärkrone aufschiebbar ist. Die Primärkrone weist eine horizontale Rille in ihrer Zylindermantelfläche auf, in welche ein elastischer Stift der Sekundärkrone eingreift und die Sekundärkrone gegen Abziehen von der Primärkrone mit einer Haltekraft sichert, welche zum Abziehen der Primärkrone überwunden werden muss.

In der WO 97/10770 A1 ist ein Halteelement für ein Kieferimplantat gezeigt. Das Halteelement liegt dicht direkte an dem Implantat an, da sich zwischen den beiden eine Einlage befindet, die eine Schnittstelle zwischen dem Halteelement und dem Implantat bildet. Das Halteelement wird dabei typischerweise aus Keramik geformt, wobei die Einlage aus einem für Röntgenstrahlung transparenten Material besteht und das Implantat auf fachübliche Weise aus Titan hergestellt ist. Das Haltemittel weist dabei in seinem Inneren eine abgestufte Zylindergeometrie auf.

In der US 2010/266 985 A1 wird eine Vorrichtung mit einem Abutment gezeigt, die mehrteilig ausgeführt ist. Das Abutment kann dabei auf einen Sockel aufgesteckt werden und wird dort von einem Halteelement gehalten. Sowohl der Sockel als auch das Abutment sind mit zylinderförmigen Abschnitten versehen.

In der EP 0 894 480 A1 wird eine an einem Zahn befestigbare Patrize mit einem zylindrischen Retensionsstift und eine mit der Zahnprothese verbindbare und an der Patrize abnehmbar befestigbare Matrize beschrieben. Als Retensionsteil in der Matrize wird ein Kunststoffeinsatz angegeben, der mit einer Retensionsnut der Patrize zusammen wirkt.

In der WO 02/24104 A1 wird eine Zahnprothese gezeigt, bei der zum Zusammenfügen eines Oberteils mit einem Unterteil an der inneren Wandfläche des Oberteils eine Öffnung vorgesehen ist, in die ein federnd gelagerter Stift eingreifen kann.

Der vorliegenden Erfindung liegt die Aufgabe zugrunde, eine vorteilhafte zahnprothetische Anordnung mit einer zementfrei befestigten, insbesondere reversibel abnehmbaren oder bedingt abnehmbaren Prothese über einem oder mehreren Kieferimplantaten sowie ein zahnprothetisches System mit einer solchen Anordnung anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Bei der erfindungsgemäßen zahnprothetischen Anordnung ergibt sich zwischen dem dem Implantat zugeordneten Unterteil und dem der Prothese zugeordneten Oberteil in dem Verbindungsabschnitt eine besonders vorteilhafte Kraftabstützung bei gleichzeitig einfachem Herstellen und Lösen der Verbindung. Von besonderer Bedeutung sind dabei die beiden axial beabstandeten zylindrischen Anlageflächen für die Abstützung des Oberteils gegen das Unterteil bei durch äußere Kräfte einwirkenden Kippmomenten. Vorzugsweise sind die erste und/oder die zweite Anlagefläche kreiszylindrisch ausgebildet.

Insbesondere können in einem zahnprothetischen System mit einer solchen zahnprothetischen Anordnung mehrere unterschiedliche Halteelemente vorgesehen sein, welche in der Weise unterschiedlich ausgelegt sind, dass unterschiedliche Halteelemente unterschiedliche Haltekräfte bei sonst gleichen zahnprothetischen Anordnungen bewirken. Die unterschiedlichen Halteelemente können sich insbesondere im Querschnitt und/oder Material, beispielsweise Elastomermaterial unterschiedlicher Shore-Härte unterscheiden. Insbesondere bei den abnehmbaren Prothesen kann dann durch Auswahl eines der mehreren unterschiedlichen Halteelemente eine für den jeweiligen Benutzer angemessene Haltekraft eingestellt werden.

Das Unterteil kann einen Abschnitt eines einteiligen Implantats oder eines von mehreren Teilen eines mehrteiligen Implantats bilden. Bei mehrteiligen Implantaten ist das Unterteil als fest mit dem im Kieferknochen verankerten Teil des Implantats verbunden anzusehen und in seiner Position relativ zum im Kiefer verankerten Teil unverlagerbar beim Aufsetzen und Abnehmen der Prothese. Das Oberteil ist typischerweise ein Teil eines mehrteiligen Aufbaus einer Prothese und kann insbesondere eine in eine Prothese eingegossenen Kappe oder als ein fest mit einem Prothesenmaterial verbundenes Abutment ausgeführt sein.

Die Erfindung beruht auf der Erkenntnis, dass bei der Benutzung einer in den Mund eines Benutzers eingesetzten Prothese neben Druckkraftbelastungen auch Kippmomente auftreten, welche durch die besondere Form und Ausrichtung von Anlageflächen, insbesondere der bezüglich einer Mittelachse des Verbindungsabschnitts zylindrischen, d. h. parallel zur Mittelachse verlaufenden in axialer Richtung durch einen Mittelabschnitt beabstandeten ersten und zweiten Anlageflächen, auf besonders vorteilhafte und zuverlässige Weise abgefangen werden können.

Die erste und/oder die zweite vorzugsweise beide Anlageflächen können in vorteilhafter Ausführung kreiszylindrische Ringflächen mit zueinander parallelen, vorzugsweise miteinander fluchtenden Zylinderachse bilden. Als Anlageflächen seien die Flächen angesehen, an welchen sich Flächen von Oberteil und Unterteil kraftabstützend berühren können. Dabei sollen sich Oberteil und Unterteil an den Anlageflächen im wesentlichen spielfrei gegenüber stehen oder berühren, so dass bei wechselnder Krafteinwirkung auf die Prothese keine für den Benutzer merkliche Relativverschiebung von Oberteil zu Unterteil ergibt. Erste und/oder zweite Anlageflächen können auch in voneinander getrennte Teilflächen unterteilt sein, wenn z. B. Oberteil oder Unterteil eine nicht rotationssymmetrische oder in Umfangsrichtung unterbrochene Strukturen aufweisen.

In bevorzugter Ausführung ist der Verbindungsabschnitt vollständig verdeckt und das in die ersten Strukturen des Vorgangs des Unterteils und die zweiten Strukturen der Aussparung des Oberteils eingreifende Halteelement unzugänglich und geschützt. Das Halteelement ist dabei vorzugsweise als Ring ausgebildet. In anderer vorteilhafter Ausführung kann das Halteelement auch bei mit dem Unterteil verbundenem Oberteil für den Benutzer oder insbesondere einen Behandler zugänglich und manuell oder mittels eines Werkzeugs betätigbar sein. Das Halteelement kann dabei insbesondere als ein quer zur Mittelachse und relativ zu Oberteil und Unterteil zwischen einer Haltestellung mit Eingriff in erste und zweite Strukturen und einer Lösestellung, in welcher zumindest der Eingriff in die ersten Strukturen aufgehoben ist, verlagerbares Riegelelement, beispielsweise als Schwenkriegel oder vorzugsweise als Steckriegel, auch stiftförmig oder bügelförmig ausgebildet sein. Als Riegelelement kann allgemein ein extrakoronales Halte-, Stütz- oder Verbindungselement für partielle Prothesen sowie für Supra-Konstruktionen von Implantaten verstanden sein.

Durch den axialen Abstand von erster und zweiter Anlagefläche und den gegenüber dem Durchmesser der ersten zylindrischen Anlagefläche geringeren Durchmesser der zweiten zylindrischen Anlagefläche ist eine genau in Richtung der Zylinderachse verlaufende Bewegungsrichtung des Oberteils relativ zum Unterteil nur während eines kurzen axialen Bewegungswegs erforderlich und der übrige Bewegungsweg kann von dieser axialen Richtung abweichen.

Der Konuswinkel eines zwischen erster und zweiter Anlagefläche gedachten Kegelstumpfs beträgt vorteilhafterweise wenigstens 10°. Vorzugsweise beträgt dieser Konuswinkel maximal 20°. In dem Mittelabschnitt des Verbindungsabschnitts verlaufen die Außenwand des dem Implantat zugeordneten Unterteils und die Innenwand des der Prothese zugeordneten Oberteils vorzugsweise zumindest annähernd in sich vom Implantat weg verjüngender Kegelstumpfform. Oberteil und Unterteil sind in dem Mittelabschnitt um eine geringes Maß voneinander beabstandet und nicht unmittelbar aneinander kraftübertragend abgestützt. Die Konizität des Verbindungsabschnitts ist insbesondere bei gegen die Okklusionsebene geneigter (angulierter) Ausrichtung der Mittelachse des Verbindungsabschnitts von Vorteil.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste erfindungsgemäße Anordnung,
- Fig. 2: eine zweite erfindungsgemäße Anordnung,
- Fig. 3: eine vergrößerte Darstellung eines Verbindungsabschnitts,
- Fig. 4: einen vergrößerten Ausschnitt zu einer oberen Zylinderfläche,
- Fig. 5: einen vergrößerten Ausschnitt zu einer unteren Zylinderfläche,
- Fig. 6: eine Zusammenbaudarstellung,
- Fig. 7: Varianten von Ringquerschnitten,
- Fig. 8: eine Draufsicht auf eine Variante mit gestecktem Bügel,
- Fig. 9: eine Seitenansicht zu Fig. 8,
- Fig. 10: eine Variante mit einem Riegel.

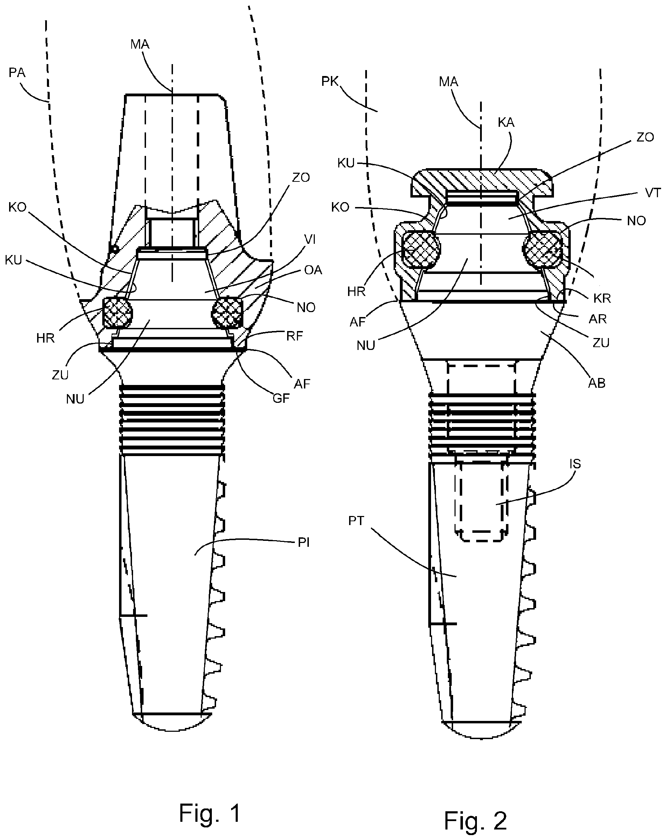

Fig. 1 zeigt in seitlicher, teilweise geschnittener Darstellung eine erste Ausführung einer erfindungsgemäßen zahnprothetischen Anordnung, bei welcher auf einem einteiligen Kieferimplantat PI eine Prothese PA befestigt ist. Von dem einteiligen Kieferimplantat PI ragt an dessen dem Kiefer abgewandten Ende ein Vorsprung VI hinaus, welcher eine annähernd konische seitliche Mantelfläche KU besitzt. Dieser Vorsprung VI bildet ein Unterteil eines Verbindungsabschnitts zwischen dem Aufbau des Prothesenkörpers PA und dem Kieferimplantat PI. Der Vorsprung VI ragt in eine Aussparung eines Aufbaukörpers OA der Prothese hinein, welcher ein Oberteil des Verbindungsabschnitts bildet. Die seitliche Innenwand des Aufbaukörpers OA bildet vorteilhafterweise eine annähernd konische Fläche KU, wobei sich die konische Mantelfläche KU des Unterteils und die konische Innenwand KO des Oberteils aber in dem dargestellten, zusammen gefügten Zustand nicht berühren.

In die im wesentliche konische Mantelfläche KU des Unterteils VI ist eine auf eine Mittelachse MA des Verbindungsabschnitts zu vertiefte Nut NU eingebracht, welcher im zusammen gefügten Zustand von Oberteil und Unterteil radial eine von der Mittelachse MA weg vertiefte Nut NO in der annähernd konischen Innenwandfläche KO des Aufbaukörpers OA des Oberteils gegenüber steht. Ein Haltering HR als Halteelement greift in beide Nuten NU, NO ein und bewirkt eine einem Abziehen des Oberteils vom Unterteil in Richtung der Mittelachse MA entgegen wirkende Haltekraft.

Der Aufbaukörper OA als Oberteil des Verbindungsabschnitts ist an dem das Unterteil des Verbindungsabschnitts bildenden Vorsprung VI an mehreren Anlageflächen abgestützt. Dabei zähle eine ringförmige, in Richtung der Mittelachse vom kieferseitigen Ende des Implantats weg weisende Grundfläche GF noch zum Unterteil des Verbindungsabschnitts. Eine Ringfläche RF an dem dem Implantat zu weisenden Stirnende des Aufbaukörpers OA stützt sich in Richtung der Mittelachse auf der Grundfläche GF des Unterteils ab und fängt die achsparallelen Komponenten von über den Prothesenkörper PA auf das Oberteil OA wirkenden, zur Mittelachse MA parallelen Kraftkomponenten zuverlässig ab.

Eine solche Abstützung zum Abfangen von zur Mittelachse MA parallelen Kraftkomponenten ist an sich bekannt.

Der Aufbaukörper OA als Oberteil des Verbindungsabschnitts ist ferner in bezüglich der Mittelachse MA radialer Richtung durch eine untere zylindrische Anlagefläche ZU und durch eine obere zylindrische Anlagefläche ZO gegen das Unterteil abgestützt. An der eine erste Anlagefläche bildenden unteren zylindrischen Anlagefläche ZU und an der eine zweite Anlagefläche bildenden oberen zylindrischen Anlagefläche ZO liegen der Aufbaukörper OA und das Unterteil VI im wesentlichen spielfrei aneinander an.

In Fig. 2 ist eine Variante einer zahnprothetischen Anordnung dargestellt, bei welcher ein Kieferimplantat zweiteilig aufgebaut ist mit einem im Kieferknochen verankerten ersten Teil PT und einem auf diesem mittels einer Schraubenverbindung IS befestigten und gegen Verdrehung gesicherten Abutment AB. In dieser Ausführung bildet das Abutment AB mit einem annähernd kegelstumpfförmigen, von dem kieferseitigen Ende des Implantats weg weisenden Vorsprung VT das Unterteil des Verbindungsabschnitts.

Auf dem Vorsprung VT ist als Teil eines Prothesenkörpers PK eine Kappe KA als das Oberteil des Verbindungsabschnitts bildendes Teil des Prothesenkörpers PK aufgesetzt. Die Kappe KA kann insbesondere in Prothesenmaterial des Prothesenkörpers PK eingegossen sein und ist fest und dauerhaft in dem Prothesenkörper PK verankert, wofür die Außenseite der Kappe KA Strukturen für eine formschlüssige Verankerung im Prothesenkörper PK aufweist.

Der Vorsprung VT als Teil des Abutments AB weise wieder eine zumindest annähernd konische Außenwand KO auf, welcher mit geringem radialem Abstand eine gleichfalls annähernd konische Innenwandfläche KU der Kappe KA in dem in Fig. 1 dargestellten zusammen gefügten Zustand gegenüber steht.

An dem Abutment AB ist in Analogie zur Ausführung nach Fig. 1 eine den Vorsprung VT ringförmig umgebende Fläche AR entsprechend der Fläche GF des Implantats nach Fig. 1 ausgebildet, an welcher sich eine der Fläche RF nach Fig. 1 entsprechende ringförmige Stirnfläche KR der Kappe KA zum Abfangen von vertikalen Druckkräften zwischen Oberteil und Unterteil des Verbindungsabschnitts aneinander anliegen und wiederum eine ringförmige Anlagefläche AF bilden. Die ringförmigen Anlageflächen AF nach Fig. 1 und Fig. 2 sind vorzugsweise ebene Ringflächen mit zur Mittelachse MA paralleler Flächennormale.

In der annähernd konischen Mantelfläche KU des das Unterteil bildenden Vorsprungs VT ist wiederum eine umlaufende Ringnut NU ausgebildet, welcher eine Ringnut NO in der annähernd konischen Innenwandfläche KO der Kappe KA radial gegenüber steht. Ein Haltering HR greift in beide Ringnuten NU, NO ein und bewirkt eine Haltekraft zwischen Oberteil und Unterteil gegen Abziehen in zur Mittelachse MA paralleler Richtung.

In gleichfalls zu Fig. 1 analoger Weise ist an dem dem kieferseitigen Ende des Implantats zu weisenden unteren Ende des Vorsprungs VT eine erste Anlagefläche in Form einer bezüglich der Mittelachse MA zylindrischen Anlagefläche ausgebildet, an welcher sich zylindrische Wandflächenabschnitte von Vorsprung VT und Kappe KA im wesentlichen spielfrei gegenüber stehen bzw. berühren. In entsprechender Weise ist an dem dem kieferseitigen Ende des Implantats abgewandten Ende des Verbindungsabschnitts eine zweite Anlagefläche in Form einer oberen zylindrischen Anlagefläche ZO zwischen dem Vorsprung VT und der Kappe KA ausgebildet.

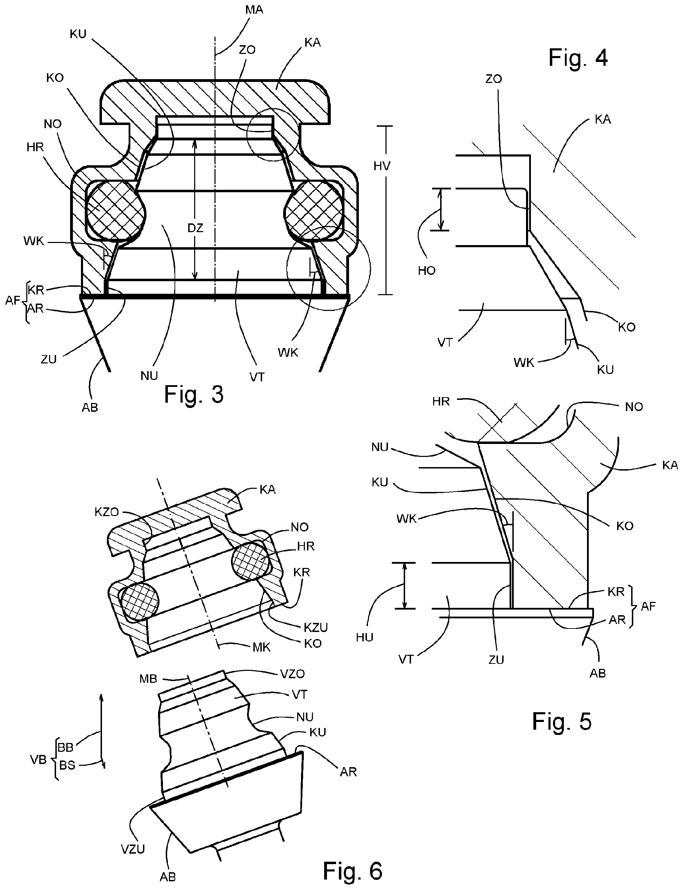

Fig. 3 zeigt den Verbindungsabschnitt der Anordnung nach Fig. 2 in vergrößerter Darstellung, aus welcher nochmals vergrößert in Fig. 4 der Bereich der zweiten Anlagefläche als oberer zylindrischer Anlagefläche ZO und in Fig. 5 der Bereich der ersten Anlagefläche in Form der unteren zylindrischen Anlagefläche ZU dargestellt sind.

Die Richtungsangaben oben und unten seien dabei in Bezug auf die Darstellungen in den Zeichnungen bezogen, welche die ungefähre Lage der zahnprothetischen Anordnung bei im Unterkiefer verankertem bzw. zu verankerndem Kieferimplantat wieder geben. Bei einer Verankerung des Kieferimplantats im Oberkiefer kehren sich die Richtungsangaben, soweit auf den Träger der Prothese bezogen, in entsprechender Weise um.

In Fig. 3 kommt durch die Vergrößerung deutlicher zum Ausdruck, dass die konischen Wandflächen KO der Kappe KA bzw. KU des annähernd kegelstumpfförmigen Vorsprungs VT um einen schmalen Spalt voneinander beabstandet sind, so dass zwischen Kappe KA als Oberteil und Vorsprung VT bzw. Abutment AB als Unterteil keine Kräfte über eine Berührung der konischen Wandflächen KU, KO stattfindet und die einzelnen Kraftkomponenten zwischen Kappe KA und Abutment AB ausschließlich über die obere zylindrische Anlagefläche ZO, die untere zylindrische Anlagefläche ZU sowie die vorzugsweise ebene ringförmige Fläche AF übertragen werden.

Der Haltering HR, welcher vorzugsweise aus einem elastisch verformbaren Material besteht, kann vorteilhafterweise auch bei Abwesenheit von äußeren, auf einen Prothesenkörper über dem Oberteil KA einwirkende Kräfte eine Grundkraft als zur Mittelachse parallele Andruckkraft bei der ringförmigen Anlagefläche AF bewirken, indem der Haltering HR in der in Fig. 3 dargestellten Position durch elastische Verformung so vorgespannt ist, dass er eine Grundkraft auf die Anlagefläche AF bewirkt.

Die Nuten NO und NU sind dabei in dem Ausführungsbeispiel nach Fig. 3 in axialer Richtung der Mittelachse MA gegeneinander versetzt, so dass der Ring HR unter elastischer Verformung eine axiale Vorspannung erzeugt. Insbesondere stützt sich der Ring dabei an einem oberen Abschnitt der Nut NU und einem unteren Abschnitt der Nut NO axial ab.

Fig. 6 zeigt ein Abutment AB und eine Kappe KA in voneinander gelöstem Zustand vor dem Aufsetzen des Oberteils auf das Unterteil bzw. nach dem Abnehmen des Oberteils von dem Unterteil. Dabei sei angenommen, dass die gesamte prothetische Anordnung mehrere Kieferimplantate und einen zusammen hängenden, mehrere Kappen KA enthaltenden Prothesenkörper umfasse. Die Kieferimplantate können mit geneigter Ausrichtung im Kiefer verankert sein, wodurch je nach Patient unterschiedliche Verhältnisse im Kieferknochen berücksichtigt werden können. Eine solche geneigte Ausrichtung kann zur Folge haben, dass durch einen oder mehrere Verbindungsabschnitte, an welchen Kappen KA mit Implantaten verbunden sind, ein Bewegungsablauf VB beim Abnehmen und Aufsetzen des Prothesenkörpers primär durch den Aufbau des Prothesenkörpers vorgegeben ist und nicht mit der Richtung der Mittelachsen MK der Kappe KA und der im zusammen gebauten Zustand mit dieser fluchtenden Mittelachse MB des Implantats bzw. Abutments AB zusammen fällt.

Bei dem erfindungsgemäßen Aufbau des Verbindungsabschnitts mit den bezüglich der Mittelachse MA zylindrischen ersten und zweiten Anlageflächen sowie dem geringeren Durchmesser der zweiten zylindrischen Anlagefläche ZO wird auf besonders vorteilhafte Weise ausgenutzt, dass trotz gegebenenfalls vorliegender Abweichung einer geneigten Mittelachse MA des Verbindungsabschnitts nach Fig. 3 bzw. Mittelachsen MK der Kappe KA und MB des Vorsprungs VT nach Fig. 6 gegenüber einer durch den Prothesenkörper vorgegebenen Verbindungsrichtung entsprechend einem Bewegungsabschnitt BB in Fig. 6 der Prothesenkörper so weit elastisch nachgiebig ist, dass über einen kurzen Bewegungsabschnitt auch ein zur Mittelachse MA bzw. den Mittelachsen MK, MB paralleler Bewegungsteil BS eines Gesamt-Bewegungsvorgangs VB möglich ist. In diesem kurzen Bewegungsabschnitt BS wird der passgenaue Eingriff an den beiden zylindrischen Anlageflächen ZU, ZO hergestellt bzw. gelöst. Durch den geringeren Durchmesser der zweiten Anlagefläche als oberer zylindrischer Anlagefläche ZO gegenüber dem Durchmesser der unteren zylindrischen Anlagefläche ZU kann nach Lösen bzw. vor Herstellen des passgenauen Eingriffs an den beiden zylindrischen Anlageflächen eine Kappe KA des Prothesenkörpers in einer durch diesen vorgegebenen Bewegungsrichtung BN gegenüber dem Implantat verlagert werden, ohne dass Konturen der Aussparung in der Kappe bzw. Konturen des Vorsprungs des Unterteils sich gegenseitig stören.

Zugleich ist bei bestehendem passgenauem Eingriff von Oberteil und Unterteil an der ersten und zweiten Anlagefläche als unterer bzw. oberer zylindrischer Anlagefläche eine exakte Positionierung quer zur Mittelachse MA sowie eine verlässliche Kraftabstützung gegeben.

In Fig. 6 sind die die verschiedenen Anlageflächen der Kappe KA als Oberteil bzw. des Vorsprungs VT als Teil des Abutments als Unterteil andererseits noch einzeln bezeichnet. Eine erste, untere, bezüglich der Mittelachse MK der Kappe KA zylindrische Innenwandfläche KZU bildet mit einer ersten, unteren, bezüglich der Mittelachse MB des Abutments zylindrischen Wandfläche VZU im zusammen gefügten Zustand die zylindrische untere Anlagefläche ZU. Eine obere zylindrische Wandfläche KZO der Kappe KA bildet im zusammen gefügten Zustand mit einer oberen zylindrischen Mantelfläche VZO des Vorsprungs VT des Unterteils die zweite zylindrische Anlagefläche ZO. Die zylindrischen Flächen KZO, KZU, VZO und VZU sind vorzugsweise kreiszylindrisch ausgebildet.

Das Maß der axialen Überlappung der zylindrischen Wandflächen KZU, VZO unter Bildung der oberen zylindrischen Anlagefläche ZO ist in Fig. 4 mit HO bezeichnet. In entsprechender Weise ist das Maß der axialen Überlappung der zylindrischen Wandflächen KZU und VZO unter Bildung der unteren zylindrischen Anlagefläche ZU in Fig. 5 mit HU bezeichnet. Die Eingriffstiefen bzw. die axialen Erstreckungen HO, HU der zylindrischen Anlageflächen ZO, ZU sind vorteilhafterweise wesentlich kleiner als die in Fig. 3 mit HV bezeichnete axiale Erstreckung des Verbindungsabschnitts, welcher hierbei von der Anlagefläche AF bis zu der Oberkante der zweiten zylindrischen Anlagefläche ZO bemessen ist. Vorteilhafterweise sind die Eingriffstiefen HO, HU auch wesentlich größer als der axiale Abstand DZ der zylindrischen Wandflächen innerhalb des Unterteils oder innerhalb des Oberteils.

Ein Konuswinkel der zumindest annähernd konischen Wandfläche KU des Unterteils ist in Fig. 3 mit WK als Neigungswinkel einer Mantellinie der Fläche KU gegen die Mittelachse MA bezeichnet. Der Wert eines solchen Konuswinkels WK beträgt vorteilhafterweise mehr als 10°, insbesondere mehr als 12°. Der Konuswinkel WK ist vorteilhafterweise kleiner als 20°, insbesondere kleiner als 18°.

Die Eingriffstiefen HO, HU der beiden zylindrischen Anlageflächen betragen vorteilhafterweise wenigstens 0,1 mm, vorzugsweise wenigstens 0,2 mm. Zur Berücksichtigung des geschilderten Bewegungsvorgangs beim Aufstecken und/oder Abnehmen eines Prothesenkörpers von Implantaten betragen die Eingriffstiefen HO, HU vorteilhafterweise nicht mehr als 0,4 mm. Die axiale Erstreckung HV des Verbindungsabschnitts liegt typischerweise in einer Größenordnung zwischen 2,5 mm und 6 mm. Die axiale Länge der ersten und/oder der zweiten zylindrischen Anlagefläche beträgt vorteilhafterweise weniger als 20 %, insbesondere weniger als 15 % und vorzugsweise mehr als 5 % der axialen Erstreckung HV des Verbindungsabschnitts. Hierdurch kann trotz einer geringen Spaltbreite von vorteilhafterweise weniger als 0,03 mm, insbesondere weniger als 0,02 mm bei der oberen und/oder unteren zylindrischen Anlagefläche ein Verkanten beim Zusammenfügen oder Lösen von Oberteil und Unterteil weitgehend vermieden werden. Der Außendurchmesser der ringförmigen weiteren Anlagefläche AF liegt typischerweise in der Größenordnung von 3 mm bis 5 mm, vorzugsweise annähernd 4 mm.

Der in den Nuten NO und NU im zusammen gefügten Zustand einliegenden und die Haltekraft gegen Abziehen bewirkende Haltering HR als Halteelement kann insbesondere aus einem Kunststoff, worunter auch ein Elastomer oder ein Gummimaterial verstanden sei, bestehen. Vorzugsweise weist die Nut NO im Oberteil eine größere radiale Tiefe gegenüber der annähernd konischen Fläche KO auf als die Nut NU gegenüber der konischen Fläche KU. Der Haltering HR liegt dann im Zustand der zahnprothetischen Anordnung mit vom Unterteil gelöstem Oberteil wie in Fig. 6 dargestellt vorteilhafterweise in der Nut NO des Oberteils ein und kann hierdurch außerhalb des Mundes des Prothesenträgers erforderlichenfalls gewechselt werden, um beispielsweise bei Verschleiß des Halterings HR nach mehrmaligem reversiblem Aufsetzen und Lösen des Prothesenkörpers von den Implantaten einen neuen Haltering einsetzen zu können oder um zum Ausprobieren einer dem Benutzer angemessenen Haltekraft nacheinander einen Vergleich mit unterschiedlichen Halteringen durchzuführen.

Die durch den Haltering HR in den vorangegangenen Beispielen bewirkte Haltekraft kann sowohl in einem Bereich für eine abnehmbare Prothese mit häufigerem Einsetzen und Entnehmen durch den Benutzer selbst als auch für eine bedingt abnehmbare Prothese mit typischerweise höherer Haltekraft ausgelegt sein.

Der Haltering HR kann, typischerweise durch Gestaltung seines Schnurquerschnitts und/oder Materials in Verbindung mit den Querschnitten der Nuten NU, NO auch für eine dauerhafte Verwindung von Oberteil und Unterteil ausgebildet sein, wofür auch vorgesehen sein kann, dass die Verbindung zwar in einer Zahnarztpraxis gelöst werden kann, hierbei aber der Haltering eventuell zerstört wird.

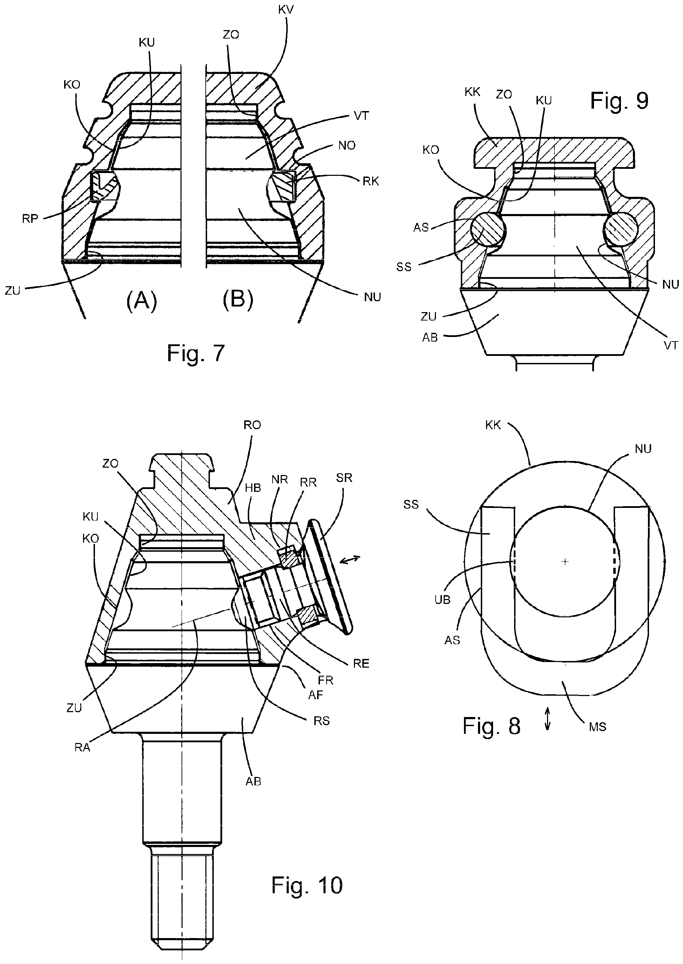

In Fig. 7 sind zwei Varianten von unrunden Schnurquerschnitten von Halteringen dargestellt, wobei ein in der linken Hälfte der Fig. 7 als Fig. 10(A) dargestellte Variante eines Halterings RP einen V-förmigen Schnurquerschnitt mit zwei Schenkeln zeigt, welche beim Aufsetzen des Oberteils KV auf das Unterteil VT elastisch aufeinander zu gedrückt und bei Erreichen der Nut NU selbsttätig wieder auseinander gedrückt werden. Ein Lösen der Verbindung des Oberteils KV vom Unterteil VT hat in dieser Variante zur Folge, dass ein Abnehmen nur mit erhöhter Kraft und typischerweise unter Zerstörung des Halterings RP erfolgen kann. Der dargestellte Schnurquerschnitt des Halterings RP muss nicht über den gesamten Umfang gleichbleibend sein, sondern kann auch nur auf mehreren Umfangsabschnitten vorliegen.

Eine weitere, in Fig. 7 (B) dargestellte Variante zeigt einen keilförmigen Schnurquerschnitt eines Halterings RK, bei welchem eine Keilspitze vom kieferseitigen Ende des Implantats abgewandt angeordnet ist und hierdurch eine erhöhte Haltekraft gegen Abziehen des Oberteils KO vom Unterteil VT gegeben ist. Je nach Ausbildung des Schnurquerschnitts und Wahl des Materials des Halterings RK im einzelnen kann ein Abheben des Oberteils KO vom Unterteil VT unter Zerstörung des Rings RK oder unter dessen Erhalt erfolgen.

Die Schnurquerschnitte der in Fig. 7 dargestellten Halteringe RP und RK bewirken insbesondere vorteilhafterweise eine Asymmetrie der Kräfte zwischen Aufstecken des Oberteils KO auf das Unterteil VT und Abziehen des Oberteils KO von dem Unterteil VT in Richtung der Mittelachse MA.

Fig. 8 zeigt schematisch mit Blickrichtung entlang der Mittelachse MA eine Ausführungsform, bei welcher ein U-förmiger Haltebügel, insbesondere ein Drahtbügel mit tangential bezüglich der Mittelachse MA und radial von dieser beabstandet verlaufenden seitlichen Bügelschenkeln SS und einem die beiden Seitenschenkel verbindenden Mittelabschnitt MS des U-förmigen Bügels vorgesehen ist. Der Bügel ist vorzugsweise in Richtung des in Fig. 8 eingezeichneten Doppelpfeils zwischen einer Haltestellung und einer Lösestellung manuell oder mittels eines Werkzeugs verlagerbar. Die seitlichen Bügelschenkel SS können von der dargestellten geraden Form abweichend geformt sein, um unter elastischer Vorspannung an der Nut NU, welche in Fig. 8 als Kreislinie ihrer oberen Begrenzung dargestellt ist, anzuliegen und so gegen unbeabsichtigtes Ausgleiten aus dem Eingriff zu verhindern. Für den Bügel ist in dem Oberteil eine quer zur Mittelachse MA verlaufende Aussparung AS, beispielsweise in Form von tangentialer Bohrungen oder einer Ringnut mit zusätzlichen Wanddurchbrüchen vorgesehen. Fig. 9 zeigt ein Beispiel einer Anordnung nach Fig. 8 in teilweise geschnittener Ansicht mit Blickrichtung senkrecht zur Mittelachse MA und parallel zur Richtung der Seitenschenkel SS des U-förmigen Bügels nach Fig. 8. Die Seitenschenkel SS liegen in Öffnungen AS einer Kappe KK ein, wobei die Öffnungen AS zu der annähernd konusförmigen Innenwand KO der Kappe KK zumindest abschnittsweise offen sind. In den Öffnungen AS einliegende Bügelschenkel SS des Bügels liegen dann mit ihrem Querschnitt teilweise in den Öffnungen AS und teilweise in der Nut NU des Vorsprungs VT des Unterteils und verhindern ein Abziehen des Oberteils KK von dem Unterteil VT.

In der in Fig. 8 dargestellten Ausführung ist ein Abheben des Oberteils KK von dem Unterteil VT nur möglich, wenn zuvor der U-förmige Bügel in der in Fig. 8 eingezeichneten Pfeilrichtung aus den Öffnungen AS des Oberteils KK heraus verlagert wird, bis die seitlichen Bügelschenkel SS aus dem Eingriff mit der Nut NU in den Überdeckungsbereichen, welche in Fig. 8 mit UB bezeichnet sind, heraus verlagert ist. Der Drahtdurchmesser eines als Bügel eingesetzten Drahtes kann vorteilhafterweise ca. 0,6 mm bis 1 mm betragen.

Eine weitere Variante des Haltens eines Oberteils RO auf einem Unterteil VT als Teil eines Abutments AB ist in Fig. 10 dargestellt. Hierbei sei eine Form des Unterteils wie in Fig. 2 bis Fig. 9 angenommen. Das Oberteil RO weist bezüglich der Mittelachse radial fortgesetzt einen Haltebereich HB auf, in welchem eine Riegelanordnung ausgebildet ist. Hierbei ist ein Riegelelement RE in einer überwiegend radial zur Mittelachse MA ausgerichteten Riegelaufnahme FR in Richtung einer Riegelachse RA zwischen einer in Fig. 10 dargestellten Eingriffsstellung und einer in Richtung der Riegelachse RA von der Mittelachse MA weg verlagerten Lösestellung verschiebbar. Das Riegelelement RE greift mit einer Riegelspitze RS in die Nut NU des Unterteils VT ein und verhindert in dieser Eingriffsstellung ein Abheben des Oberteils RO von dem Unterteil VT. Das Riegelelement RE ist unter der Einrichtung einer Federkraft in Richtung der Mittelachse MA gedrückt und behält so die Eingriffsstellung von sich aus bei .Die Federkraft ist im skizzierten vorteilhaften Beispiel dadurch aufgebracht, dass in einer die Riegelachse RA umgebenden Nut NR in dem Haltebereich HB ein elastisch verformbarer Ring RR einliegt, welcher in der Nut NR gegen eine Verschiebung in Richtung der Riegelachse RA abgestützt ist und mit einer sich von der Riegelspitze RS weg verjüngenden Konusfläche im Verlauf des Riegelelements RE so zusammen wirkt, dass eine Kraft auf das Riegelelement in Richtung auf die Mittelachse MA hin entsteht. Der Ring RR kann aus elastischem Kunststoffmaterial bestehen oder auch durch einen Metallring, welcher auch geschlitzt sein kann, gegeben sein. Eine außerhalb der Riegelführung FR angeordnete Handhabe SR ermöglicht ein manuelles Zurückziehen des Riegelelements RE aus der in Fig. 10 gezeichneten Eingriffsstellung und danach ein Abheben des Oberteils von dem Unterteil. Hierbei kann der Ring RR durch die genannte Konusfläche des Riegelelements und Erhöhung der rückstellend wirkenden Kraft auf das Riegelelement komprimiert oder radial in einen Freiraum innerhalb der Nut NR aufgeweitet werden.

Anstelle des in Fig. 10 dargestellten Steckriegels können auch andere quer zur Mittelachse verlagerbare Riegelelemente, insbesondere Schwenkriegel, Stifte etc. vorgesehen sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar und nur durch die Patentansprüche begrenzt.

## Patentansprüche

1. Zahnprothetische Anordnung mit wenigstens einem Kieferimplantat (PI, PT) und einem Aufbau (OA, KA), welche in einem Verbindungsabschnitt über ein dem Kieferimplantat zugeordnetes Unterteil (VI, VT) und ein dem Aufbau zugeordnetes Oberteil (OA, KA) miteinander verbunden sind, wobei in dem Verbindungsabschnitt
- das Unterteil (VI, VT) mit einem eine Mittelachse umgebenden Vorsprung in eine Aussparung des Oberteils (OA, KA) eingreift,
- das Unterteil (VI, VT) und das Oberteil (OA, KA) an mehreren Anlageflächen kraftübertragend aneinander abgestützt sind,
- eine erste Anlagefläche (ZU) eine bezüglich der Mittelachse (MA) erste zylindrische Anlagefläche an dem dem Kieferimplantat zugewandten Ende des Verbindungsabschnitts ist,
- eine zweite Anlagefläche (ZO) eine bezüglich der Mittelachse zweite zylindrische Anlagefläche an dem dem Kieferimplantat abgewandten Ende des Verbindungsabschnitts ist,
- der Durchmesser der zweiten zylindrischen Anlagefläche (ZO) ist geringer als der Durchmesser der ersten Anlagefläche (ZU),
- eine dritte Anlagefläche (AF) eine Ringfläche an dem dem Kieferimplantat zuweisenden Ende des Verbindungsabschnitts ist, und
- in einem Mittelabschnitt ein Halteelement (HR) formschlüssig in erste Strukturen (NU) des Vorsprungs und zweite Strukturen (NO) der Aussparung eingreift und eine Haltekraft gegen axiales Abziehen des Oberteils (OA, KA) vom Unterteil (VI, VT) bewirkt,
**dadurch gekennzeichnet, dass**
das Oberteil (OA, KA) eine konische Wandfläche (KO) aufweist, das Unterteil eine konische Wandfläche (KU) aufweist, wobei das Unterteil (VI, VT) als annähernd kegelstumpfförmiger Vorsprung gebildet ist, wobei das Oberteil und das Unterteil um einen schmalen Spalt voneinander beabstandet sind, so dass zwischen dem Oberteil und Unterteil keine Kräfteübertragung über eine Berührung der konischen Wandflächen stattfindet und Kraftkomponenten zwischen dem Oberteil und Unterteil ausschließlich über die erste zylindrische Anlagefläche (ZU), die zweite zylindrische Anlagefläche (ZO) sowie die ebene ringförmige dritte Anlagefläche (AF) übertragbar sind.

2. Zahnprothetische Anordnung nach Anspruch 1, **dadurch gekennzeichnet, dass** das Halteelement (HR) in einem von äußeren Kräften freien Ruhezustand unter elastischer Vorspannung an ersten und zweiten Strukturen (NU, NO) einliegt und unter dieser Vorspannung eine axiale Andruckkraft an der dritten Anlagefläche (AP) bewirkt.

3. Zahnprothetische Anordnung nach einem der Ansprüche 1 oder 2, **dadurch gekennzeichnet, dass** der Konuswinkel (WK) von Konusflächen (KU, KO) des Unterteils (VT) bzw. des Oberteils (KA) zwischen erster (ZU) und zweiter (ZO) zylindrischer Anlagefläche zwischen 10° und 20° liegt.

4. Zahnprothetische Anordnung nach einem der Ansprüche 1 bis 3, **dadurch gekennzeichnet, dass** die erste Struktur durch eine Ringnut (NU) gebildet ist.

5. Zahnprothetische Anordnung nach einem der Anordnung 1 bis 4, **dadurch gekennzeichnet, dass** die zweite Struktur durch eine Ringnut (NO) gebildet ist.

6. Zahnprothetische Anordnung nach einem der Ansprüche 1 bis 5, **dadurch gekennzeichnet, dass** das Halteelement wenigstens ein quer zur Mittelachse verlagerbares Riegelelement enthält.

7. Zahnprothetische Anordnung nach einem der Ansprüche 1 bis 6, **dadurch gekennzeichnet, dass** das Halteelement durch einen elastisch verformbaren Ring (HR) gebildet ist.

8. Zahnprothetische Anordnung nach Anspruch 7, **dadurch gekennzeichnet, dass** der Ring aus einem gummielastischem und/oder elastisch komprimierbaren Material besteht.

9. Zahnprothetische Anordnung nach einem der Ansprüche 1 bis 8, **dadurch gekennzeichnet, dass** die zweite Struktur wenigstens eine tangential bezüglich der Mittelachse verlaufende Einstecköffnung (AS), vorzugsweise zwei im wesentlichen parallele Einstecköffnungen aufweist.

10. Zahnprothetische Anordnung nach Anspruch 9, **dadurch gekennzeichnet, dass** das Halteelement wenigstens einen stiftförmigen Abschnitt, vorzugsweise in einem U-förmigen Bügel vereint zwei im wesentlichen parallele stiftförmige Abschnitte (SS) aufweist.

11. Zahnprothetische Anordnung nach einem der Ansprüche 1 bis 10, **dadurch gekennzeichnet, dass** die zweite Struktur einen bezüglich der Mittelachse im wesentlichen radial gerichteten Durchbruch (FR) aufweist.

12. Zahnprothetische Anordnung nach Anspruch 11, **dadurch gekennzeichnet, dass** das Halteelement (RE) in dem Durchbruch (FR) radial verlagerbar ist.

13. Zahnprothetische Anordnung nach einem der Ansprüche 1 bis 12, **dadurch gekennzeichnet, dass** die Haltekraft ohne Zerstörung von Oberteil (KA) und Unterteil (VT) überwindbar ist, um die Verbindung zwischen Oberteil und Unterteil zu lösen.

14. Zahnprothetische Anordnung nach Anspruch 13, **dadurch gekennzeichnet, dass** die Haltekraft ohne Zerstörung des Halteelements (HR) überwindbar ist.

15. Zahnprothetische Anordnung nach einem der Ansprüche 1 bis 14, **dadurch gekennzeichnet, dass** das Oberteil (KA) und das Unterteil (VT) unter elastischer Verformung des Halteelements (HR) in axialer Steckbewegung verbindbar sind.

16. Zahnprothetisches System mit einer zahnprothetischen Anordnung nach Anspruch 1 und mit mehreren unterschiedlichen, untereinander austauschbaren Halteelementen, welche für unterschiedliche Haltekräfte ausgelegt sind.

## Claims

1. Dental prosthetic arrangement with at least one jaw implant (PI, PT) and an abutment (OA, KA), which are connected to each other in a connection portion by way of a lower part (VI, VT) assigned to the jaw implant and an upper part (OA, KA) assigned to the abutment, wherein, in the connection portion,
- the lower part (VI, VT) engages in a recess of the upper part (OA, KA) via a projection that surrounds a central axis,
- the lower part (VI, VT) and the upper part (OA, KA) are supported on each other, in a force-transmitting manner, at several contact faces,
- a first contact face (ZU) is, with respect to the central axis (MA), a first cylindrical contact face at the end of the connection portion facing towards the jaw implant,
- a second contact face (ZO) is, with respect to the central axis, a second cylindrical contact face at the end of the connection portion facing away from the jaw implant,
- the diameter of the second cylindrical contact face (ZO) is less than the diameter of the first contact face (ZU),
- a third contact face (AF) is an annular face at the end of the connection portion facing towards the jaw implant, and,
- in a central portion, a holding element (HR) engages with a form fit in first structures (NU) of the projection and second structures (NO) of the recess and brings about a holding force against axial removal of the upper part (OA, KA) from the lower part (VI, VT),
**characterized in that**
the upper part (OA, KA) has a conical wall face (KO), and the lower part has a conical wall face (KU), wherein the lower part (VI, VT) is formed as an approximately frustoconical projection, wherein the upper part and the lower part are spaced apart from each other by a narrow gap, such that no transmission of force takes place between the upper part and lower part via contact of the conical wall faces, and force components between the upper part and lower part can be transmitted exclusively via the first cylindrical contact face (ZU), the second cylindrical contact face (ZO) and the plane, annular third contact face (AF).

2. Dental prosthetic arrangement according to Claim 1, **characterized in that**, in a rest state free of external forces, the holding element (HR) lies on first and second structures (NU, NO) with elastic pretensioning, and, under this pretensioning, brings about an axial pressing force on the third contact face (AP).

3. Dental prosthetic arrangement according to either of Claims 1 and 2, **characterized in that** the cone angle (WK) of cone faces (KU, KO) of the lower part (VT) or upper part (KA) between first cylindrical contact face (ZU) and second cylindrical contact face (ZO) lies between 10° and 20°.

4. Dental prosthetic arrangement according to one of Claims 1 to 3, **characterized in that** the first structure is formed by an annular groove (NU).

5. Dental prosthetic arrangement according to one of arrangement 1 to 4, **characterized in that** the second structure is formed by an annular groove (NO) .

6. Dental prosthetic arrangement according to one of Claims 1 to 5, **characterized in that** the holding element contains at least one latch element which is movable transversely with respect to the central axis.

7. Dental prosthetic arrangement according to one of Claims 1 to 6, **characterized in that** the holding element is formed by an elastically deformable ring (HR).

8. Dental prosthetic arrangement according to Claim 7, **characterized in that** the ring is made of a rubber-elastic and/or elastically compressible material.

9. Dental prosthetic arrangement according to one of Claims 1 to 8, **characterized in that** the second structure has at least one insertion opening (AS) extending tangentially with respect to the central axis, preferably two substantially parallel insertion openings.

10. Dental prosthetic arrangement according to Claim 9, **characterized in that** the holding element has at least one pin-shaped portion, preferably two substantially parallel pin-shaped portions (SS) combined in a U-shaped bracket.

11. Dental prosthetic arrangement according to one of Claims 1 to 10, **characterized in that** the second structure has an aperture (FR) that is directed substantially radially with respect to the central axis.

12. Dental prosthetic arrangement according to Claim 11, **characterized in that** the holding element (RE) is radially movable in the aperture (FR).

13. Dental prosthetic arrangement according to one of Claims 1 to 12, **characterized in that** the holding force can be overcome, without destruction of upper part (KA) and lower part (VT), in order to release the connection between upper part and lower part.

14. Dental prosthetic arrangement according to Claim 13, **characterized in that** the holding force can be overcome without destruction of the holding element (HR).

15. Dental prosthetic arrangement according to one of Claims 1 to 14, **characterized in that** the upper part (KA) and the lower part (VT) can be connected, with elastic deformation of the holding element (HR), in an axial plug-in movement.

16. Dental prosthetic system with a dental prosthetic arrangement according to Claim 1 and with a plurality of different and interchangeable holding elements, which are designed for different holding forces.

## Revendications

1. Agencement de prothèse dentaire comprenant au moins un implant maxillaire (PI, PT) et une structure (OA, KA), qui sont reliés ensemble par le biais d'une partie inférieure (VI, VT) associée à l'implant maxillaire et d'une partie supérieure (OA, KA) associée à la structure, dans lequel, dans la portion de liaison,
- la partie inférieure (VI, VT) s'engage avec une saillie entourant un axe médian dans un évidement de la partie supérieure (OA, KA),
- la partie inférieure (VI, VT) et la partie supérieure (OA, KA) sont supportées l'une contre l'autre avec transfert de force au niveau de plusieurs surfaces d'appui,
- une première surface d'appui (ZU) est une première surface d'appui cylindrique par rapport à l'axe médian (MA) au niveau de l'extrémité de la portion de liaison tournée vers l'implant maxillaire,
- une deuxième surface d'appui (ZO) est une deuxième surface d'appui cylindrique par rapport à l'axe médian au niveau de l'extrémité de la portion de liaison opposée à l'implant maxillaire,
- le diamètre de la deuxième surface d'appui cylindrique (ZO) est inférieur au diamètre de la première surface d'appui (ZU),
- une troisième surface d'appui (AF) est une surface annulaire au niveau de l'extrémité de la portion de liaison tournée vers l'implant maxillaire,
- dans une portion centrale, un élément de retenue (HR) s'engage par engagement par correspondance de formes dans des premières structures (NU) de la saillie et des deuxièmes structures (NO) de l'évidement et génère une force de retenue opposée au retrait axial de la partie supérieure (OA, KA) de la partie inférieure (VI, VT),
**caractérisé en ce que**
la partie supérieure (OA, KA) présente une surface de paroi conique (KO), la partie inférieure présente une surface de paroi conique (KU), la partie inférieure (VI, VT) étant formée en tant que saillie de forme pratiquement tronconique, la partie supérieure et la partie inférieure étant espacées l'une de l'autre par un étroit interstice de telle sorte qu'entre la partie supérieure et la partie inférieure ne se produise aucun transfert de force par contact des surfaces de paroi coniques et que les composantes de force entre la partie supérieure et la partie inférieure puissent être transmises exclusivement par le biais de la première surface d'appui cylindrique (ZU), de la deuxième surface d'appui cylindrique (ZO) ainsi que de la troisième surface d'appui annulaire plane (AF).

2. Agencement de prothèse dentaire selon la revendication 1, **caractérisé en ce que** l'élément de retenue (HR), dans un état de repos exempt de forces extérieures, s'insère par précontrainte élastique contre la première et la deuxième structure (NU, NO) et génère sous l'effet de cette précontrainte une force de pression axiale contre la troisième surface d'appui (AP).

3. Agencement de prothèse dentaire selon l'une quelconque des revendications 1 ou 2, **caractérisé en ce que** l'angle de conicité (WK) des surfaces coniques (KU, KO) de la partie inférieure (VT) et/ou de la partie supérieure (KA) entre la première surface d'appui cylindrique (ZU) et la deuxième surface d'appui cylindrique (ZO) est compris entre 10° et 20°.

4. Agencement de prothèse dentaire selon l'une quelconque des revendications 1 à 3, **caractérisé en ce que** la première structure est formée par une rainure annulaire (NU).

5. Agencement de prothèse dentaire selon l'une quelconque des agencement 1 à 4, **caractérisé en ce que** la deuxième structure est formée par une rainure annulaire (NO).

6. Agencement de prothèse dentaire selon l'une quelconque des revendications 1 à 5, **caractérisé en ce que** l'élément de retenue contient au moins un élément de verrouillage déplaçable transversalement à l'axe médian.

7. Agencement de prothèse dentaire selon l'une quelconque des revendications 1 à 6, **caractérisé en ce que** l'élément de retenue est formé par une bague déformable élastiquement (HR).

8. Agencement de prothèse dentaire selon la revendication 7, **caractérisé en ce que** la bague se compose d'un matériau ayant l'élasticité du caoutchouc et/ou d'un matériau comprimable élastiquement.

9. Agencement de prothèse dentaire selon l'une quelconque des revendications 1 à 8, **caractérisé en ce que** la deuxième structure présente au moins une ouverture d'enfichage (AS) s'étendant tangentiellement par rapport à l'axe médian, de préférence deux ouvertures d'enfichage essentiellement parallèles.

10. Agencement de prothèse dentaire selon la revendication 9, **caractérisé en ce que** l'élément de retenue présente au moins une portion en forme de broche, de préférence deux portions en forme de broche essentiellement parallèles (SS) réunies pour former un étrier en forme de U.

11. Agencement de prothèse dentaire selon l'une quelconque des revendications 1 à 10, **caractérisé en ce que** la deuxième structure présente un orifice (FR) orienté essentiellement radialement par rapport à l'axe médian.

12. Agencement de prothèse dentaire selon la revendication 11, **caractérisé en ce que** l'élément de retenue (RE) peut être déplacé radialement dans l'orifice (FR).

13. Agencement de prothèse dentaire selon l'une quelconque des revendications 1 à 12, **caractérisé en ce que** la force de retenue peut être surmontée sans destruction de la partie supérieure (KA) et de la partie inférieure (VT) afin de desserrer la liaison entre la partie supérieure et la partie inférieure.

14. Agencement de prothèse dentaire selon la revendication 13, **caractérisé en ce que** la force de retenue peut être surmontée sans destruction de l'élément de retenue (HR).

15. Agencement de prothèse dentaire selon l'une quelconque des revendications 1 à 14, **caractérisé en ce que** la partie supérieure (KA) et la partie inférieure (VT) peuvent être reliées par déformation élastique de l'élément de retenue (HR) dans la direction d'enfichage axiale.

16. Système de prothèse dentaire comprenant un agencement de prothèse dentaire selon la revendication 1 et plusieurs éléments de retenue différents et interchangeables, qui sont conçus pour différentes forces de retenue.
